# FASCICULE DE BREVET EUROPEEN

(11) **EP 1 060 702 B1**
(45) Date de publication et mention de la délivrance du brevet: **01.10.2003**
(21) Numéro de dépôt: 00420124.0
(22) Date de dépôt: 13.06.2000
(51) Int. Cl.: A47J 37/12

(54) **Dispositif de monte et baisse pour panier de cuisson**
Verfahren zum Heben und Senken für einen Fritierkorb
Device for lowering or raising a frying basket

(30) Priorité: 18.06.1999 FR 9907984
(43) Date de publication de la demande: 20.12.2000
(73) Titulaire: SEB S.A., 69130 Ecully (FR)
(72) Inventeur: Thevenin, Jean-Marie, 21610 Bourberain (FR)

(56) Documents cités:
- EP-A- 0 891 736
- WO-A-94/26157
- FR-A- 2 701 376
- FR-A- 2 754 163
- US-A- 5 746 117

## Description

La présente invention concerne le domaine technique général des appareils de cuisson comportant un récipient de cuisson, destiné à contenir un bain de cuisson, et un panier de cuisson, destiné à contenir les aliments à cuire. La présente invention se rapporte plus particulièrement mais non exclusivement aux friteuses électriques à cuve amovible.

Il est connu de réaliser des dispositifs de monte et baisse dans lesquels le panier est monté coulissant sur une glissière solidaire d'un support venant en appui sur le rebord de la cuve de cuisson. Sur le support est articulée une poignée permettant de manoeuvrer le panier de cuisson. La transmission du mouvement de la poignée au panier s'effectue par exemple au moyen d'une languette métallique flexible.

Dans les dispositifs du type précité le support peut être réalisé en deux parties assemblées par exemple par vissage. Les deux parties du support forment deux demi boîtiers à l'intérieur desquels sont disposées la ou les pièces servant à la transmission du mouvement de la poignée au panier. La glissière est montée dans les deux demi boîtiers.

Un inconvénient des dispositifs précités réside dans le fait que l'assemblage requiert de nombreuses opérations et notamment des opérations de vissage, collage ou soudage des deux demi boîtiers.

Par ailleurs, l'étanchéité des deux demi boîtiers est souvent imparfaite, notamment au niveau de la glissière, ce qui rend possible les infiltrations de vapeurs grasses à l'intérieur des deux demi boîtiers. Le nettoyage de tels dispositifs présente donc des difficultés.

Il est connu du document US 5 746 117 un dispositif de monte et baisse d'un panier dans une cuve d'un appareil de cuisson tel qu'une friteuse. Le dispositif comporte un support prévu pour venir en appui sur l'appareil et un bâti issu du support. Le panier est monté articulé sur le bâti et une poignée est montée mobile sur le support. La poignée est associée à un moyen de transmission du mouvement de la poignée au panier. Le support forme un logement pour le passage du moyen de transmission. Le moyen de transmission comporte deux bras sortant chacun d'une ouverture latérale ménagée dans la face latérale du support faisant face au panier. Le support est formé par une pièce en L, dont les parois forment un capot présentant une large ouverture inférieure. L'assemblage du support et de la poignée est peu simple à réaliser. Le mécanisme de transmission du mouvement n'est pas protégé, notamment contre les projections alimentaires, du fait de l'ouverture inférieure et des ouvertures latérales.

L'objet de la présente invention vise à proposer un dispositif de monte et baisse d'un panier dans une cuve, dont l'assemblage soit facilité.

Un autre objet de la présente invention vise à proposer un dispositif de monte et baisse d'un panier dans une cuve, dont le nettoyage soit facilité.

Un autre objet de la présente invention vise à proposer un dispositif de monte et baisse d'un panier dans une cuve, dont l'encombrement soit réduit.

Les objets assignés à l'invention sont atteints avec un dispositif de monte et baisse d'un panier dans une cuve d'un appareil de cuisson, notamment friteuse, comportant un support prévu pour venir en appui sur l'appareil, un bâti issu du support, le panier étant monté coulissant ou articulé sur le bâti, une poignée montée mobile sur le support, associée à un moyen de transmission du mouvement de la poignée au panier, le support formant un logement pour le passage du moyen de transmission, du fait que le support comprend deux demi boîtiers assemblés au moyen d'une épingle venant enserrer deux parois appartenant chacune respectivement à l'un et l'autre des demi boîtiers, le logement étant ménagé entre les deux demi boîtiers. Par le terme épingle, on comprend une pièce déformable élastiquement, obtenue à partir d'une tige ou d'une languette repliée. Ainsi l'assemblage des deux demi boîtiers formant le support peut être effectué simplement par l'insertion de l'épingle. Des opérations telles que vissage ou collage ne sont plus nécessaires.

Avantageusement, l'épingle est logée dans une cavité ménagée entre les deux demi boîtiers, ladite cavité débouchant sur une ouverture. L'épingle insérée dans la cavité par l'ouverture est ainsi protégée d'une action volontaire ou involontaire de l'utilisateur.

Avantageusement alors l'ouverture est ménagée sur une face inférieure du support en une position prévue pour venir en regard du rebord supérieur de la cuve. Ceci permet d'éviter que l'épingle ne soit en contact avec les vapeurs grasses s'échappant de la cuve lorsque le support est placé sur la cuve.

Selon une caractéristique avantageuse, le bâti est monté dans une face frontale du support, cette disposition permettant de limiter l'encombrement du support et par conséquence, l'encombrement de l'appareil..

Selon une autre caractéristique avantageuse, le bâti est monté dans le support selon une direction sensiblement horizontale. Ces dispositions permettent de limiter les sollicitations exercées par le panier sur l'ancrage du bâti.

Selon une autre caractéristique avantageuse, le bâti présente deux bras montés chacun dans l'un des demi boîtiers. Cette disposition permet de répartir l'effort sur le support, de réduire la taille des ancrages du bâti sur le support, de dégager un espace entre les deux bras pour le passage du moyen de transmission du mouvement de la poignée au panier, et ainsi de limiter la hauteur du support.

Selon une autre caractéristique avantageuse, le bâti est une glissière formée à partir d'une tige métallique repliée, une telle construction étant particulièrement économique.

Avantageusement alors, la glissière est formée à partir d'une tige de section circulaire. Cette disposition permet de faciliter la réalisation des percements dans les parois du support pour loger la glissière.

Selon une autre caractéristique avantageuse, l'épingle vient en appui élastique sur au moins une encoche ménagée sur la partie du bâti montée dans le support. Ainsi, l'épingle assure le maintien du bâti tandis que le bâti bloque l'épingle dans la cavité, ce qui assure l'assemblage des deux demi boîtiers.

Avantageusement alors, l'épingle comporte deux branches coopérant chacune avec une des encoches du bâti. Le bâti peut ainsi comporter deux bras montés chacun dans l'un des demi boîtiers.

Selon une autre caractéristique avantageuse, les parois délimitent un logement ménagé entre les deux demi boîtiers, le logement étant prévu pour recevoir au moins une partie du moyen de transmission du mouvement de la poignée au panier. Cette disposition permet de réduire l'encombrement en hauteur du support.

Avantageusement alors, les parois présentent chacune un trou susceptible de recevoir une tige formant un axe du moyen de transmission du mouvement de la poignée au panier, l'épingle mise en place dans le support venant maintenir en place la tige dans le trou. Ainsi, l'épingle occupe une position stable dès sa mise en place dans les demi boîtiers.

L'invention sera mieux comprise à l'étude d'exemples de réalisation pris à titre nullement limitatifs et illustrés dans les figures annexées dans lesquelles :
- la figure 1 est une vue en perspective d'un premier exemple de réalisation d'un dispositif selon l'invention, dans lequel l'un des deux demi boîtiers a été enlevé,
- la figure 2 est une vue de dessous du dispositif selon le premier exemple de réalisation,
- la figure 3 est une vue de face en coupe partielle du dispositif selon le premier exemple de réalisation,
- la figure 4 est une vue schématique de côté en coupe partielle d'un deuxième exemple de réalisation, dans lequel l'un des deux demi boîtiers a été enlevé,
- la figure 5 est une vue schématique de face en coupe du dispositif montré à la figure 4,
- la figure 6 est une vue schématique partielle de côté en coupe du dispositif montré à la figure 4,
- la figure 7 est une vue partielle en perspective de la glissière montrée à la figure 4.

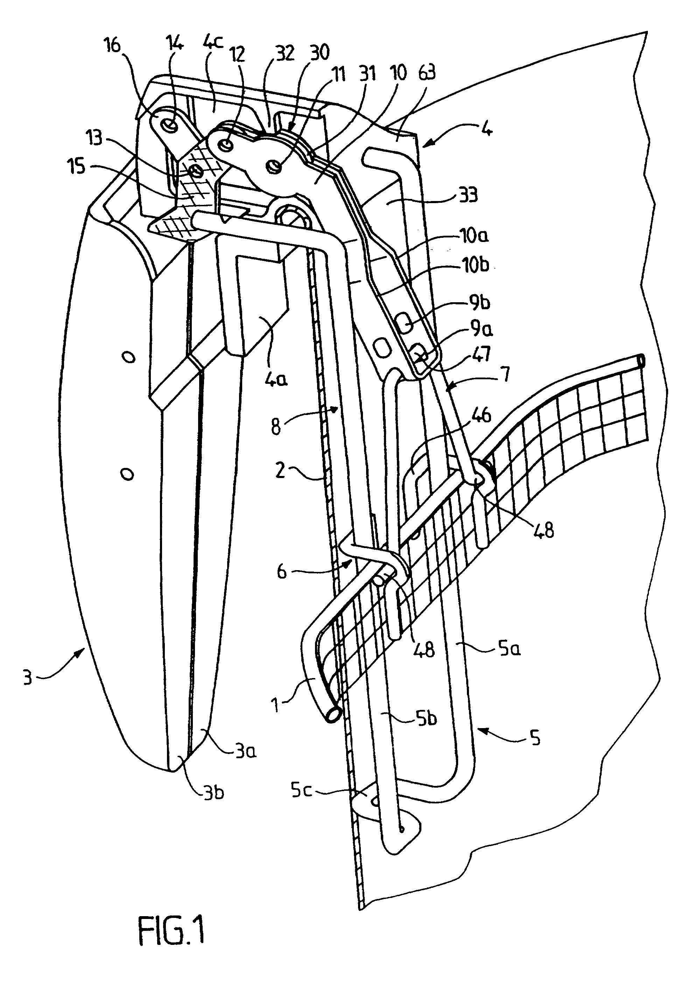

La figure 1 montre un dispositif de monte et baisse d'un panier 1 disposé sur le rebord d'une cuve 2 d'un appareil de cuisson tel qu'une friteuse électrique. Le dispositif de monte et baisse du panier 1 comporte un support 4 prévu pour venir en appui sur l'appareil, plus précisément sur le rebord de la cuve 2. Le dispositif comporte également un bâti 8, issu du support 4, formant une glissière 5 descendant dans la cuve 2. Des moyens de guidage 6 du panier 1, sont montés coulissants sur la glissière 5, seuls une partie des moyens de guidage 6 et du panier 1 étant représentés à la figure 1. Le dispositif comporte également une poignée 3 montée articulée sur le support 4.

La poignée 3 est mobile entre une première position, sensiblement horizontale, dans laquelle le panier 1 occupe une position relevée dans la cuve 2, et une deuxième position, sensiblement verticale avec l'extrémité libre de la poignée 3 orientée vers le bas, dans laquelle le panier 1 occupe une position abaissée dans la cuve 2, tel que montré à la figure 1.

Le dispositif comporte un levier 10 articulé en un axe 11 par rapport au support 4 et un moyen d'accrochage 7 du panier 1, monté mobile en rotation d'une part sur l'une des branches du levier 10 et d'autre part sur le panier 1 ou son moyen de guidage 6, la poignée 3 étant reliée à l'autre branche du levier, si désiré au moyen d'un mécanisme. Le dispositif comporte en outre des moyens de blocage du levier 10 dans une position correspondant à la position relevée du panier.

Tel que montré à la figure 1, l'autre branche du levier 10 comporte une articulation 12 avec l'extrémité d'une pièce de transmission 15. L'extrémité de la pièce de transmission 15 opposée à l'articulation 12 est montée coulissante dans la poignée 3. La pièce de transmission 15 comporte en outre une deuxième articulation 13 avec une première extrémité d'une pièce de retenue 16 articulée en son autre extrémité par un deuxième axe 14 par rapport au support 4.

Le support 4 est formé par deux demi boîtiers, avantageusement symétriques, dont l'un 4a seulement est montré à la figure 1. Les deux demi boîtiers assemblés forment un logement 4c permettant le passage de l'une des extrémités du levier 10 et de l'une des extrémités de la pièce de transmission 15. La pièce de retenue 16 est également disposée dans le logement 4c contre le demi boîtier 4a. Le logement 4c comporte des surfaces d'étanchéité avec le levier 10, notamment des surfaces 32 en arc de cercle coopérant avec des secteurs circulaires 30 du levier 10 concentriques avec le premier axe 11 de rotation et ainsi que des surfaces coopérant avec les parois du levier 10. De préférence une deuxième pièce de retenue, identique à celle montrée à la figure 1, peut être disposée de manière symétrique dans le logement 4c contre l'autre demi boîtier.

Le premier axe de rotation 11 et le deuxième axe de rotation 14 sont par exemple formés par des tiges métalliques (non montrées aux figures) emmanchées à force dans chacun des demi boîtiers, ces tiges traversant respectivement le levier 10 et la ou les pièces de retenue 16.

Le levier 10 est formé par une pièce de tôle métallique de forme allongée et repliée en U, la pliure formant la première branche de levier où est articulé le moyen d'accrochage du panier, les extrémités libres des deux bras 10a, 10b venant enserrer la pièce de transmission 15 au niveau de la première articulation 12. Une rondelle d'étanchéité 31 est disposée entre les deux bras 10a, 10b du levier 10 au niveau du premier axe 11, le diamètre de ladite rondelle étant égal à celui des secteurs circulaires 30.

La pièce de transmission 15 est formée par une pièce de tôle métallique de forme allongée dont l'une des extrémités est assemblée au moyen d'un axe (non montré à la figure 1), formé par exemple par un rivet, avec les extrémités des deux bras 10a, 10b du levier 10 pour former la première articulation 12. Sur la pièce de transmission 15 sont assemblées, au moyen d'un autre axe (également non montré à la figure 1), formé par exemple aussi par un rivet, les pièces de retenue 16, pour former la deuxième articulation 13.

La poignée 3 est de préférence formée par deux demi coques 3a, 3b formant un logement à l'intérieur duquel est susceptible de se déplacer la pièce de transmission 15.

Les bras 10a, 10b du levier 10 s'écartent vers l'extrémité du levier en relation avec le moyen d'accrochage 7 du panier 1. Le levier 10 comporte plusieurs moyens de retenue 9a, 9b du moyen d'accrochage 7.

Le moyen d'accrochage 7 est formé par une tige métallique de section circulaire dont la partie centrale 47 est enfilée dans deux orifices formant les moyens de retenue 9a, ces orifices étant ménagés chacun dans l'un des bras du levier 10. De part et d'autre de cette partie centrale, la tige forme deux coudes pour se prolonger en direction du panier 1. Les extrémités 48 de la tige formant le moyen d'accrochage 7 sont recourbées pour venir en prise avec des lobes appartenant à des éléments 46 constituant les moyens de guidage 6. Les éléments 46 sont de préférence soudés sur le panier 1.

Le levier 10, le moyen d'accrochage 7 et le panier 1 sont ainsi en prise directe, ce qui évite que le panier puisse à la suite d'un coincement temporaire se dégager de ses moyens d'entraînement pour ensuite retomber, au risque de provoquer des éclaboussures si la cuve comporte un bain de cuisson.

L'utilisateur peut libérer les extrémités 48 des éléments 46 par simple pression sur les branches de la tige formant le moyen d'accrochage 7.

La glissière 5 sur laquelle coulisse le moyen de guidage 6 est formée par deux tiges métalliques parallèles 5a, 5b. L'extrémité supérieure des tiges 5a, 5b est recourbée pour être montée dans la face frontale 63 du support 4, respectivement dans l'un 4a et l'autre des demi boîtiers, selon une direction sensiblement horizontale. Les extrémités inférieures des tiges 5a, 5b se rejoignent en un coude 5c, les deux tiges 5a, 5b étant de préférence issues d'une même pièce repliée de section circulaire.

Tel que montré à la figure 1 la glissière 5 présente entre les deux tiges 5a, 5b une échancrure 33 occupée en partie par le levier 10.

Tel que montré à la figure 1 l'extrémité libre coudée 5c de la glissière 5 est repliée de manière à d'une part prendre appui contre la cuve 2 et d'autre part permettre le passage des moyens de guidage 6 après avoir décroché les moyens d'accrochage 7 pour sortir le panier 1 de la glissière 5.

La glissière 5, les moyens de guidage 6, et les moyens d'accrochage 7 sont réalisés de préférence en acier inoxydable, pour les qualités alimentaires de ce matériau d'une part, et pour sa faible conductibilité thermique et sa faible capacité calorifique d'autre part, qui permettent de limiter la montée en température et de faciliter le refroidissement. Le panier 1 peut notamment être réalisé en métal traité.

Selon l'invention, les deux demi boîtiers du support 4 sont assemblés au moyen d'une épingle 50.

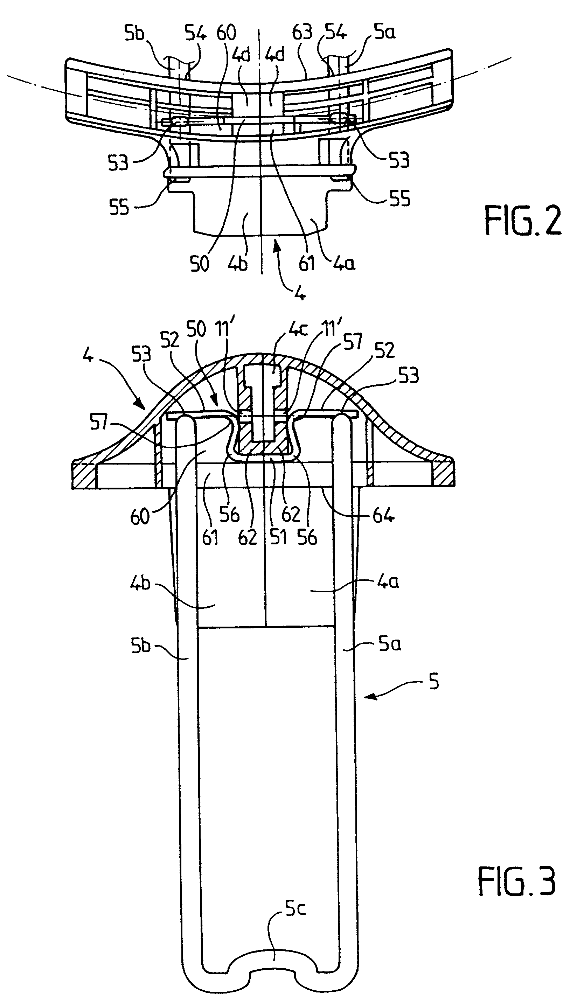

Tel que montré aux figures 2 et 3, l'épingle 50 est formée par une tige métallique élastique repliée logée dans une cavité 60 formée par les deux demi boîtiers 4a, 4b. La cavité 60 débouche sur une face inférieure 64 des demi boîtiers 4a, 4b par une ouverture 61 disposée en une position prévue pour venir en regard du rebord supérieur de la cuve.

Tel que montré à la figure 3, l'épingle 50 est symétrique et comporte une partie centrale 51 prolongée de part et d'autre par un premier coude 56 formant un angle supérieur à 90°, de telle sorte que le fil de l'épingle revienne en direction de l'axe de symétrie de l'épingle. Un deuxième coude 57 tend à ramener le fil de l'épingle dans une direction sensiblement parallèle à la partie centrale 51, pour former deux branches 52. L'épingle 50 forme ainsi un Oméga (Ω).

Les coudes 57 viennent enserrer deux parois 62 appartenant chacune à l'un des demi boîtiers 4a, 4b. Les parois 62 ménagent entre elles le logement 4c prévu pour recevoir le levier 10 (non montré aux figures 2 et 3). On remarquera sur la figure 3 les trous 11' ménagés dans les parois 62, prévus pour le passage de la tige formant le premier axe 11.

Les branches 52 sont prévues pour venir en appui élastique dans des encoches 53 ménagées sur l'extrémité supérieure recourbée de chacune des tiges 5a, 5b. Chaque demi boîtier comporte un orifice 54 et un trou borgne 55 prévus pour recevoir l'extrémité de l'une des tiges 5a, 5b.

L'assemblage des deux demi boîtiers 4a, 4b s'effectue de la manière suivante. Tout d'abord le levier 10, la pièce de transmission 15 et la ou les pièces de retenue 16 sont assemblées, par exemple au moyen de rivets, pour former un mécanisme servant de moyen de transmission du mouvement de la poignée 3 au panier 1. Ce mécanisme et la poignée 3 sont montés sur l'un des demi boîtiers, le deuxième demi boîtier venant étant assemblé ensuite. L'épingle 50 est introduite dans l'ouverture 61 et enserre les parois 62. Le support 4 formé par les deux demi boîtiers 4a, 4b peut alors être manipulé.

Les tiges 5a, 5b sont ensuite introduites dans les orifices 54. Les branches 52 de l'épingle 50 viennent en prise dans les encoches 53 lorsque les extrémités des tiges 5a, 5b sont insérées dans les trous borgnes 55, de préférence légèrement en force. Pour faciliter la mise en place de la glissière 5 les branches 52 peuvent être repoussées à l'aide d'un outil. La glissière 5 formée par les tiges 5a, 5b est ainsi maintenue de manière durable dans le support 4. De plus, l'assemblage du support 4 et l'assemblage de la glissière 5 sur le support 4 sont facilités. En outre, le support est démontable en repoussant les branches 52 à l'aide d'un outil et en retirant la glissière 5, puis l'épingle 50.

A titre de variante de réalisation, les tiges 5a, 5b peuvent présenter un entraxe légèrement inférieur à celui des orifices 54 et des trous borgnes 55. Ainsi les tiges 5a, 5b doivent être écartées avant leur insertion dans les demi boîtiers 4a, 4b. Une fois insérées dans les demi boîtiers 4a, 4b, les tiges 5a, 5b exercent un effort plaquant les deux demi boîtiers l'un contre l'autre. L'effort de maintien exercé par l'épingle 50 sur les deux demi boîtiers 4a, 4b peut alors être limité.

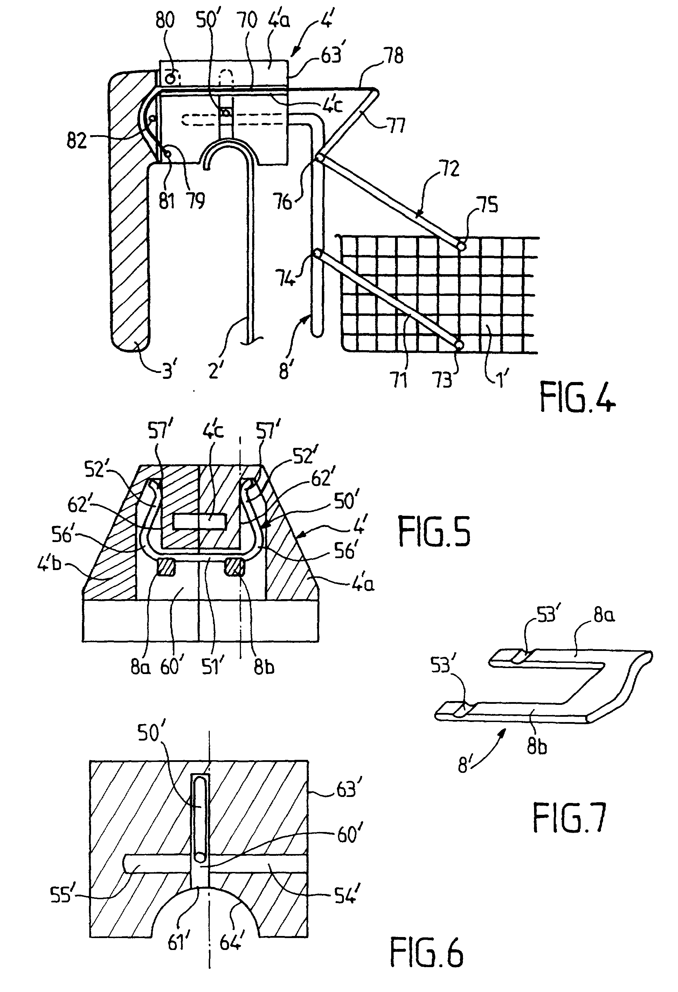

L'exemple de réalisation montré aux figures 4 à 7 diffère de l'exemple de réalisation précédent notamment en ce que le panier 1' est monté articulé sur le bâti 8' au moyen de deux bras superposés 71, 72, et en ce que le panier 1' est manoeuvré par l'intermédiaire d'une languette flexible 70 permettant la transmission du mouvement de la poignée 3'.

Le bras inférieur 71 est monté mobile en rotation en un axe 73 sur la partie inférieure du panier 1' et en un axe 74 sur le bâti 8'. Le bras supérieur 72 est monté mobile en rotation en un axe 75 sur la partie supérieure du panier 1' et en un axe 76 sur le bâti 8'. Le bras supérieur 72 comporte au delà de l'axe 76 une branche 77 reliée à la poignée 3' par l'intermédiaire de la languette flexible 70, formée par exemple par un ruban métallique.

La languette 70 coulisse dans un logement 4'c débouchant d'une part sur la face frontale 63' du support 4' disposée à l'intérieur de la cuve 2' et d'autre part sur la face opposée disposée en regard de la poignée 3' montée mobile en rotation sur le support 4' en un axe 80. L'une des extrémités 78 de la languette 70 est fixée à la branche 77, alors que l'autre extrémité 79 est fixée au support 4' en un ancrage 81.

La poignée 3' comporte une tige 82 prévue pour tirer l'extrémité 78 de la languette 70 dans le support 4' pour remonter le panier en faisant pivoter le bras supérieur 72. La poignée 3' comporte également des moyens de blocage en position relevée du panier 1', non montrés aux figures.

Tel que mieux visible à la figure 5, l'épingle 50' comporte une partie centrale 51' prolongée par deux branches 52' enserrant les parois 62' des demi boîtiers 4'a, 4'b. Les deux branches 52' prolongeant la partie centrale 51' comportent chacune deux coudes 56', 57', les deuxièmes coudes 57' venant enserrer les parois 62'. Entre les parois 62' est ménagé le logement 4'c prévu pour recevoir la languette 70.

Tel que montré aux figures 5 et 6, les demi boîtiers 4'a, 4'b présentent une cavité 60' débouchant en leur partie inférieure par une ouverture 61' prévue pour le montage de l'épingle 50'. L'ouverture 61' est disposée sur une face 64' prévue pour reposer sur le rebord supérieur de la cuve 2.

Selon une direction perpendiculaire sont ménagés dans chaque demi boîtier 4'a, 4'b sur la face frontale 63' un percement 54' prolongé au delà de la cavité 60' par un trou borgne 55'. Les percements 54' et les trous borgnes 55' présentent une forme oblongue prévue pour recevoir les extrémités supérieures du bâti 8'.

Tel que mieux montré à la figure 7, les extrémités supérieures du bâti 8' prévues pour être montées dans le support 4' sont formées par deux bras 8a, 8b présentant chacun une encoche 53'.

Lors du montage du bâti 8' dans le support 4', le bâti 8' déforme élastiquement les deux branches 52' de l'épingle 50' et la partie centrale 51' de l'épingle 50' vient se bloquer dans les encoches 53'.

De nombreuses améliorations peuvent être apportées à cet appareil dans le cadre des revendications.

Notamment, le moyen de transmission du mouvement de la poignée au panier peut consister en une tige coulissant dans le support, et/ou être assisté par un moyen de rappel.

A titre de variante les percements et les trous borgnes pourraient être situés dans un seul des deux demi boîtiers, ou encore être mitoyens, l'extrémité du bâti étant alors adaptée en conséquence.

A titre de variante l'ouverture prévue pour le montage de l'épingle pourrait être ménagée dans un seul des deux demi boîtiers formant le support.

Le dispositif de monte et baisse proposé peut notamment être utilisé pour des appareils destinés à des cuissons autres que les fritures en bain d'huile, tels que par exemple des cuiseurs à oeufs, à pâtes, et de manière générale pour toute cuisson en immersion totale ou partielle.

## Revendications

1. Dispositif de monte et baisse d'un panier (1 ; 1') dans une cuve (2 ; 2') d'un appareil de cuisson, notamment friteuse, comportant un support (4 ; 4') prévu pour venir en appui sur l'appareil, un bâti (8 ; 8') issu du support (4 ; 4'), le panier (1 ; 1') étant monté coulissant ou articulé sur le bâti (8 ; 8'), une poignée (3 ; 3') montée mobile sur le support (4 ; 4'), associée à un moyen de transmission du mouvement de la poignée au panier, le support (4 ; 4') formant un logement (4c ; 4'c) pour le passage du moyen de transmission, **caractérisé en ce que** le support (4 ; 4') comprend deux demi boîtiers (4a, 4b ; 4'a, 4'b) assemblés au moyen d'une épingle (50 ; 50') venant enserrer deux parois (62 ; 62') appartenant chacune respectivement à l'un (4a ; 4'a) et l'autre (4b ; 4'b) des demi boîtiers, le logement (4c ; 4'c) étant ménagé entre les deux demi boîtiers (4a, 4b ; 4'a, 4'b).

2. Dispositif de monte et baisse selon la revendication 1, **caractérisé en ce que** l'épingle (50 ; 50') est logée dans une cavité (60 ; 60') ménagée entre les deux demi boîtiers (4a, 4b ; 4'a, 4'b), ladite cavité débouchant sur une ouverture (61 ; 61').

3. Dispositif de monte et baisse selon la revendication 2, **caractérisé en ce que** l'ouverture (61 ; 61') est ménagée sur une face inférieure (64 ; 64') du support (4 ; 4') en une position prévue pour venir en regard du rebord supérieur de la cuve (2 ; 2').

4. Dispositif de monte et baisse selon l'une des revendications 1 à 3, **caractérisé en ce que** le bâti (8 ; 8') est monté dans une face frontale (63 ; 63') du support (4 ; 4').

5. Dispositif de monte et baisse selon l'une des revendications 1 à 4, **caractérisé en ce que** le bâti (8 ; 8') est monté dans le support (4 ; 4') selon une direction sensiblement horizontale.

6. Dispositif de monte et baisse selon l'une des revendications 1 à 5, **caractérisé en ce que** le bâti (8 ; 8') présente deux bras (5a, 5b ; 8a, 8b) montés chacun dans l'un des demi boîtiers (4a, 4b ; 4'a, 4'b).

7. Dispositif de monte et baisse selon l'une des revendications 1 à 6, **caractérisé en ce que** le bâti (8) est une glissière (5) formée à partir d'une tige métallique repliée.

8. Dispositif de monte et baisse selon la revendication 7, **caractérisé en ce que** la glissière (5) est formée à partir d'une tige de section circulaire.

9. Dispositif de monte et baisse selon l'une des revendications 1 à 8, **caractérisé en ce que** l'épingle (50 ; 50') vient en appui élastique sur au moins une encoche (53 ; 53') ménagée sur la partie du bâti (8 ; 8') montée dans le support (4 ; 4').

10. Dispositif de monte et baisse selon la revendication 9, **caractérisé en ce que** l'épingle (50) comporte deux branches (52) coopérant chacune avec une des encoches (53) du bâti (8).

11. Dispositif de monte et baisse selon l'une des revendications 1 à 10, **caractérisé en ce que** les parois (62 ; 62') délimitent le logement (4c; 4'c) ménagé entre les deux demi boîtiers (4a, 4b ; 4'a, 4'b), le logement (4c ; 4'c) étant prévu pour recevoir au moins une partie (10 ; 70) du moyen de transmission du mouvement de la poignée (3 ; 3') au panier (1 ; 1').

12. Dispositif de monte et baisse selon la revendication 11, **caractérisé en ce que** les parois (62) présentent chacune un trou (11') susceptible de recevoir une tige formant un axe (11) du moyen de transmission du mouvement de la poignée (3) au panier (1), l'épingle (50) mise en place dans le support (4) venant maintenir en place la tige dans le trou (11').

## Patentansprüche

1. Vorrichtung zum Anheben und Absenken eines Korbes (1; 1') in einer Schüssel (2; 2') eines Kochgeräts, insbesondere einer Friteuse, mit einem Träger (4; 4'), der vorgesehen ist, um am Gerät anzuliegen, einem Gestell (8; 8'), das vom Träger (4; 4') stammt, wobei der Korb (1; 1') gleitend oder angelenkt am Gestell (8; 8') angebracht ist, einem Griff (3; 3'), der beweglich am Träger (4; 4') angebracht ist und mit einem Mittel zur Übertragung der Bewegung des Griffs auf den Korb verbunden ist, wobei der Träger (4; 4') eine Aufnahme (4c; 4'c) für den Durchgang des Übertragungsmittels bildet, **dadurch gekennzeichnet, daß** der Träger (4; 4') zwei Halbgehäuse (4a, 4b; 4'a, 4'b) aufweist, die mittels eines Stifts (50; 50') zusammengefügt sind, welcher zwei Wände (62; 62') einspannt, die jeweils zum einen (4a; 4'a) bzw. zum anderen (4b; 4'b) der Halbgehäuse gehören, wobei die Aufnahme (4c; 4'c) zwischen den zwei Halbgehäusen (4a, 4b; 4'a, 4'b) ausgebildet ist.

2. Vorrichtung zum Anheben und Absenken nach Anspruch 1, **dadurch gekennzeichnet, daß** der Stift (50; 50') in einem Hohlraum (60; 60') aufgenommen ist, der zwischen den zwei Halbgehäusen (4a, 4b; 4'a, 4'b) ausgebildet ist, wobei der Hohlraum in eine Öffnung (61; 61') mündet.

3. Vorrichtung zum Anheben und Absenken nach Anspruch 2, **dadurch gekennzeichnet, daß** die Öffnung (61; 61') an einer Innenseite (64; 64') des Trägers (4; 4') in einer Position ausgebildet ist, die dazu vorgesehen ist, dem oberen Rand der Schüssel (2; 2') gegenüber zu liegen.

4. Vorrichtung zum Anheben und Absenken nach einem der Ansprüche 1 bis 3, **dadurch gekennzeichnet, daß** das Gestell (8; 8') in einer Vorderseite (63; 63') des Trägers (4; 4') montiert ist.

5. Vorrichtung zum Anheben und Absenken nach einem der Ansprüche 1 bis 4, **dadurch gekennzeichnet, daß** das Gestell (8; 8') im Träger (4; 4') entlang einer im wesentlichen horizontalen Richtung montiert ist.

6. Vorrichtung zum Anheben und Absenken nach einem der Ansprüche 1 bis 5, **dadurch gekennzeichnet, daß** das Gestell (8; 8') zwei Arme (5a, 5b; 8a, 8b) aufweist, die jeweils in einem der Halbgehäuse (4a, 4b; 4'a, 4'b) angebracht sind.

7. Vorrichtung zum Anheben und Absenken nach einem der Ansprüche 1 bis 6, **dadurch gekennzeichnet, daß** das Gestell (8) eine Gleitschiene (5) ist, die aus einer umgebogenen Metallstange gebildet ist.

8. Vorrichtung zum Anheben und Absenken nach Anspruch 7, **dadurch gekennzeichnet, daß** die Gleitschiene (5) aus einer Stange mit kreisförmigem Querschnitt gebildet ist.

9. Vorrichtung zum Anheben und Absenken nach einem der Ansprüche 1 bis 8, **dadurch gekennzeichnet, daß** der Stift (50; 50') an zumindest einem Einschnitt (53; 53') elastisch anliegt, der in dem Teil des Gestells (8; 8') ausgebildet ist, der im Träger (4; 4') angebracht ist.

10. Vorrichtung zum Anheben und Absenken nach Anspruch 9, **dadurch gekennzeichnet, daß** der Stift (50) zwei Abschnitte (52) aufweist, die jeweils mit einem der Einschnitte (53) des Gestells (8) zusammenwirken.

11. Vorrichtung zum Anheben und Absenken nach einem der Ansprüche 1 bis 10, **dadurch gekennzeichnet, daß** die Wände (62; 62') die Aufnahme (4c; 4'c) begrenzen, die zwischen den zwei Halbgehäusen (4a, 4b; 4'a, 4'b) ausgebildet ist, wobei die Aufnahme (4c; 4'c) vorgesehen ist, um zumindest einen Teil (10; 70) des Mittels zur Übertragung der Bewegung des Griffs (3; 3') auf den Korb (1; 1') aufzunehmen.

12. Vorrichtung zum Anheben und Absenken nach Anspruch 11, **dadurch gekennzeichnet, daß** die Wände (62) jeweils ein Loch (11') aufweisen, das eine Stange aufnehmen kann, die eine Achse (11) des Mittels zur Übertragung der Bewegung des Griffs (3) auf den Korb (1) bildet, wobei der Stift (50), der im Träger (4) angebracht ist, die Stange im Loch (11') an der Stelle hält.

## Claims

1. A device for raising and lowering a basket (1; 1') in a vessel (2; 2') of a cooking appliance, in particular a fryer, the device comprising a support (4; 4') provided so as to bear on the appliance, a stand (8; 8') originating from the support (4; 4'), the basket (1; 1') being slidably mounted or hinged to the stand (8; 8'), a handle (3; 3') movably mounted on the support (4; 4'), and associated with transmission means for transmitting the movement of the handle to the basket, the support (4; 4') forming a housing (4c; 4'c) through which the transmission means can pass, the device being **characterized in that** the support (4; 4') comprises two half housings (4a, 4b; 4'a, 4'b) assembled together by means of a clip (50; 50') clamping two walls (62; 62') each belonging to a respective one of the half housings (4a, 4'a; 4b, 4'b), the housing (4c; 4'c) being formed between the two half housings (4a, 4b; 4'a, 4'b).

2. A raising and lowering device according to claim 1, **characterized in that** the clip (50; 50') is housed in a cavity (60; 60') formed between the two half housings (4a, 4b; 4'a, 4'b), said cavity opening out on an opening (61; 61').

3. A raising and lowering device according to claim 2, **characterized in that** the opening (61; 61') is formed on a bottom face (64; 64') of the support (4; 4') in a position provided so as to face the top rim of the vessel (2; 2').

4. A raising and lowering device according to any one of claims 1 to 3, **characterized in that** the stand (8, 8') is mounted in a front face (63; 63') of the support (4; 4').

5. A raising and lowering device according to any one of claims 1 to 4, **characterized in that** the stand (8, 8') is mounted in the support (4; 4') in a substantially horizontal direction.

6. A raising and lowering device according to any one of claims 1 to 5, **characterized in that** the stand (8, 8') presents two arms (5a, 5b; 8a, 8b) each mounted in one of the half housings (4a, 4b; 4'a, 4'b).

7. A raising and lowering device according to any one of claims 1 to 6, **characterized in that** the stand (8) is a slideway (5) formed from a folded metal rod.

8. A raising and lowering device according to claim 7, **characterized in that** the slideway (5) is formed from a rod of circular section.

9. A raising and lowering device according to any one of claims 1 to 8, **characterized in that** the clip (50; 50') bears resiliently on at least one notch (53; 53') formed on the portion of the stand (8; 8') mounted in the support (4; 4').

10. A raising and lowering device according to claim 9, **characterized in that** the clip (50) includes two branches (52) each co-operating with one of the notches (53) of the stand (8).

11. A raising and lowering device according to any one of claims 1 to 10, **characterized in that** the walls (62; 62') define the housing (4c; 4'c) formed between the two half housings (4a, 4b; 4'a, 4'b), the housing (4c; 4'c) being provided to receive at least a portion (10; 70) of the transmission means for transmitting the movement of the handle (3; 3') to the basket (1; 1').

12. A raising and lowering device according to claim 11, **characterized in that** the walls (62) each present a hole (11') suitable for receiving a rod forming a pin (11) of the transmission means for transmitting the movement of the handle (3) to the basket (1), the clip (50) put in place in the support (4) holding the rod in place in the hole (11').
